# EUROPEAN PATENT SPECIFICATION

(11) **EP 2 270 901 B1**
(45) Date of publication and mention of the grant of the patent: **26.12.2012**
(21) Application number: 10187897.3
(22) Date of filing: 24.09.2004
(51) Int. Cl.: H01M 4/131, H01M 4/485, H01M 4/505, H01M 4/525, H01M 10/052, H01M 10/42, H01M 4/36, H01M 4/04, H01M 4/133

(54) **Method for regulating terminal voltage of cathode during overdischarge and cathode active matrial for lithium secondary battery**
Verfahren zur Regelung der Entladeschlussspannung der Kathode während einer Überentladung und Kathodenaktivmaterial für eine Lithium-Sekundärbatterie
Procédé de régulation de la tension terminale d'une cathode pendant une surcharge, et matériau actif de cathode pour accumulateur au lithium

(30) Priority: 26.09.2003 KR 20030066866; 26.09.2003 KR 20030066865
(43) Date of publication of application: 05.01.2011
(62) Divisional of application: 04774711.8
(73) Proprietor: LG Chem, Ltd., Youngdungpo-gu Seoul 150-721 (KR)
(72) Inventor: Chang, Sung Kyun, 402-808, Incheon (KR); Hong, Seung Tae, 305-340, Daejeon (KR); Kim, Hyeong Jin, 305-810, Daejeon (KR); Ryu, Duk Hyun, 302-162, Deajeon (KR); Goh, Eun Young, 305-761, Daejeon (KR); Lee, Ho Chun, 305-308, Daejeon (KR); Jeong, Jun Yong, 301-211, Daejeon (KR); Yeon, Jin Hee, 305-340, Daejeon (KR)
(74) Representative: van Westenbrugge, Andries

(56) References cited:
- EP-A- 0 794 155
- EP-A1- 1 256 996
- WO-A-03/081697
- US-A- 5 759 719

## Description

### Technical Field

The present invention relates to a method for regulating terminal voltage of a cathode during overdischarge. The present invention also relates to a lithium secondary battery, which is low in capacity loss after overdischarge, having excellent capacity restorability after overdischarge and shows an effect of preventing a battery from swelling at a high temperature.

### Background Art

International patent publication WO03/081697 discloses a lithium secondary battery comprising an overdischarge-preventing agent.

European patent publication EP-A-1 256 996 discloses a cathode active material for a lithium secondary battery containing a lithium transition metal oxide such as LiCoO₂ which further comprises a lithium nickel oxide such as Li₂NiO₂.
Recently, as mobile communication industries and information electronic industries progress in various technologies, a light-weight, high-capacity lithium secondary battery is increasingly in demand. However, a lithium secondary battery may ignite and explode due to extreme heat emission when it is over-charged or is in a short circuit state. Moreover, when a lithium secondary battery is overdischarged below a normal voltage range, its capacity is significantly reduced, preventing forthcoming use.

For these reasons, a safety device like a protection circuit, a PTC element, etc., has been attached to a lithium secondary battery since lithium secondary batteries were first developed. However, such protection circuits, PTCs, etc. , are not preferable because they are expensive and take up a large volume, thereby increasing the price, volume and weight of a battery. Therefore, batteries with a reduced manufacturing cost and an increased battery capacity without using such a protection circuit, PTC, etc. , are very much in demand.

Conventionally, an organic or an inorganic additive is used in a non-aqueous electrolyte, or the outer structure of a battery is changed for the purpose of ensuring battery safety when a battery is over-charged or has short-circuited. However, when a battery is overdischarged below an adequate voltage, even if one tries to charge the battery again, the battery capacity is so significantly reduced that the battery are no longer capable of charge/discharge.

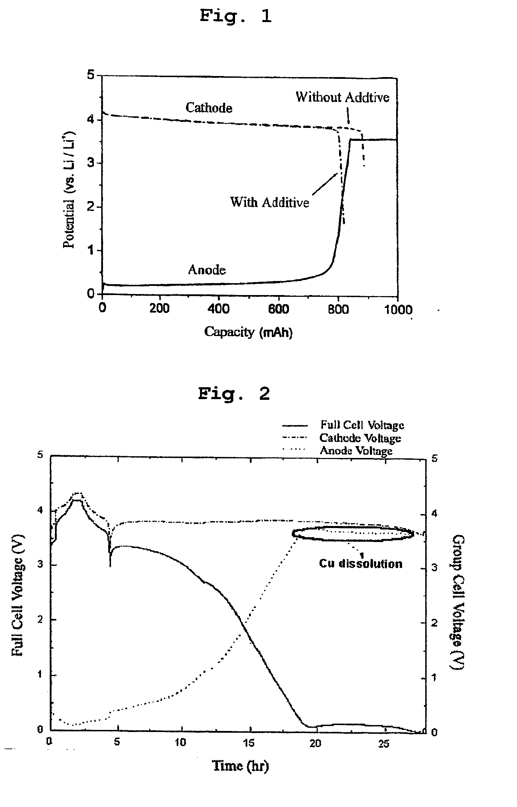

Conventional lithium secondary batteries developed hitherto have a structure in which discharge is limited and terminated by an anode during overdischarge. Particularly, when a non-aqueous lithium secondary battery is first charged, a solid electrolyte interface (SEI) film is formed on the surface of an anode. In this case, a great amount of lithium ions released from a cathode are used and thus the amount of Li participating in charge/discharge is reduced. When over-discharging occurs in the state in which the amount of Li is reduced, activated Li sites in the cathode are not fully occupied and the cathode voltage is not decreased below a certain voltage. Therefore, discharge is terminated by the anode (see FIG. 1).

Meanwhile, a battery capacity is significantly reduced by the following reasons. A battery voltage is defined by a difference between a cathode voltage and an anode voltage. Additionally, a battery is continuously discharged at a low electric current, even after the battery voltage is decreased below a general-use voltage. At this case, due to the consumption of Li ion in the anode, the cathode voltage is no longer reduced and thus it is slowly decreased. On the other hand, the anode voltage rapidly increases and eventually rises to 3.6 V, at which point a copper foil used as an anode collector is oxidized. Thus, the copper foil is dissolved in a copper ion state to contaminate an electrolyte. After that, when the battery is re-charged the copper ion is attached again to the surface of the anode and thus the anode active material becomes unusable. Therefore, if oxidization of the copper foil occurs, the battery capacity is rapidly reduced after overdischarge, so that the battery becomes unusable.

Accordingly, it is desirable to develop a battery, discharge of which is limited by a cathode, so that the battery capacity may not be significantly reduced after overdischarge. Further, a new method for making such a cathode-limited battery is very much in demand

### Disclosure of the Invention

As mentioned above, there is a problem that the voltage of an anode having a relatively high irreversible capacity increases rapidly, when overdischarging occurs, and thus copper ions are dissolved from an anode collector, so that charge/discharge cycles may not progress successfully. In order to prevent the increase of the voltage in an anode during overdischarge, it is desirable to increase the irreversible capacity of a cathode so as to decrease the voltage of the cathode more rapidly. For the purpose of increasing the irreversible capacity of a cathode, the present invention adopted a method of adding an additive having a high irreversible capacity to a cathode.

According to the present invention, a method for regulating terminal voltage is provided as defined in Claim 1.

According to a further aspect of the present invention, a cathode active material for a lithium secondary battery is provided as defined in Claim 3.

In an even further aspect of the present invention, a lithium secondary battery is provided as defined in Claim 9.

We have found that, when a lithium nickel oxide represented by the following formula 1 is used as an additive for a cathode active material, a phase transition occurs in the lithium nickel oxide to control irreversible reactions in a cathode and an anode, and thus the battery capacity is not significantly reduced after overdischarge.

Therefore, the present invention has been made based on this finding. It is an object of the present invention to provide a battery, the discharge of which is limited by a cathode, using a cathode active material comprising a lithium nickel oxide represented by the following formula 1 as an additive, so that the battery capacity may not be significantly reduced after overdischarge.

Meanwhile, the lithium nickel oxide may cause swelling of a battery at a high temperature depending on its added amount. With regard to this, we have found that when a lithium nickel oxide represented by the following formula 1, in which nickel is partially substituted with other elements, is used as an additive for a cathode active material, the battery capacity is not significantly reduced after overdischarge while maintaining overall performance of the battery, and furthermore, it is possible to obtain excellent capacity restorability after overdischarge and to prevent a battery from swelling at a high temperature. We have also found that when a lithium nickel oxide represented by the following 1 that is coated with an oxide other than lithium nickel oxides, is used as an additive for a cathode active material, the battery capacity is not significantly reduced after overdischarge while maintaining overall performance of the battery, and furthermore, it is possible to obtain excellent capacity restorability after overdischarge and to prevent the battery from swelling at a high temperature, in this case too.

The lithium secondary battery according to the present invention comprises: (a) a cathode comprising the cathode active material according to the present invention, (b) an anode, (c) a separator, and (d) a non-aqueous electrolyte containing a lithium salt and an electrolyte compound.

The present invention will be explained in detail hereinafter.

The lithium nickel oxide used as an additive for a cathode active material according to the present invention is represented by the following formula 1 :

Li₂₊ₓNi_{1-y}M_{y}O₂₊ₐ

wherein, x is a number satisfying-0.5≤x≤0.5, y is a number satisfying 0≤y≤1, a is a number satisfying 0≤a<0.3, and M is at least one element selected from the group consisting of P, B, C, Al.

The compound represented by formula 1 preferably belongs to the space group Immm. More preferably, in the stereostructure of the compound, a Ni/M composite oxide forms a tetra-coordinated planar structure (Ni,M)O₄ and two tetra-coordinated planar structures facing to each other share one side (formed by O-O), thereby forming a primary chain as a whole. Additionally, the compound represented by formula 1 preferably has the following lattice constants: a=3.7±0.5 Å, b=2.8±0.5 Å and c=9.2±0.5 Å, wherein α= 90°, β= 90° and γ= 90°

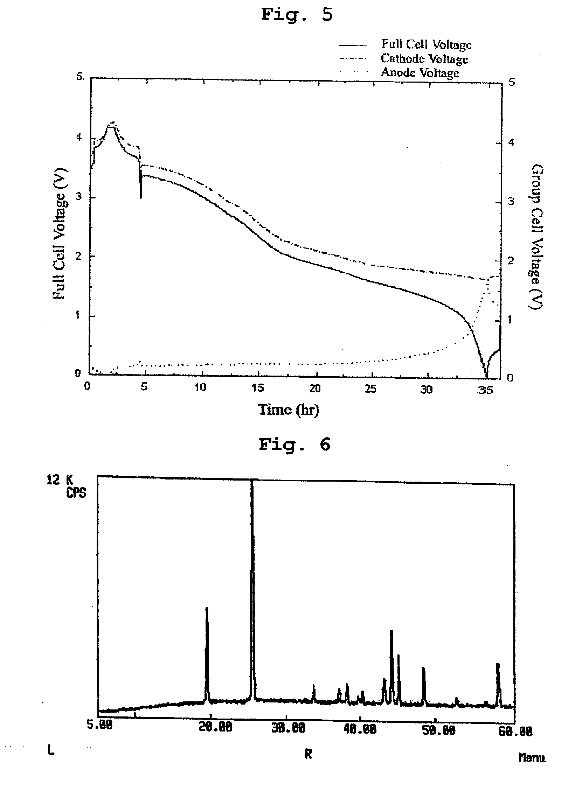

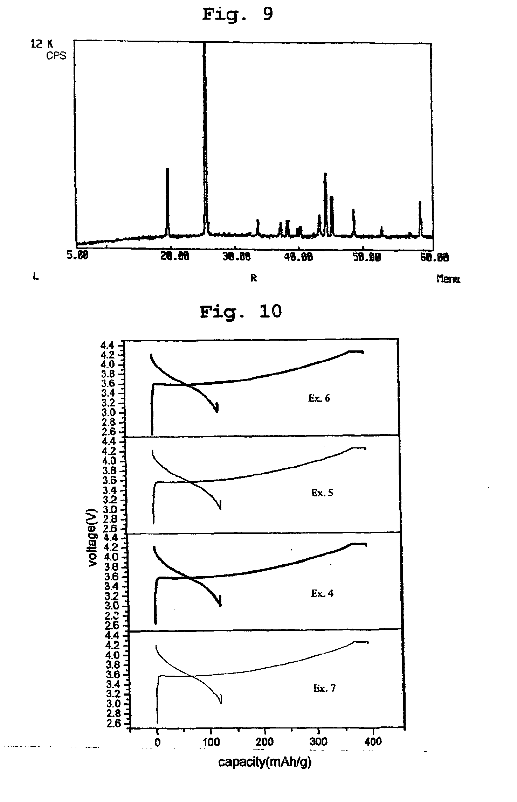

As shown in FIGs. 6 to 9, a lithium nickel oxide of formula 1 in which nickel is partially substituted with other elements shows an X-ray diffraction pattern (FIGs. 6 to 8) similar to that of Li₂NiO₂ (FIG. 9). This indicates that although nickel in the lithium nickel oxide is partially substituted with other elements, the lithium nickel oxide is not changed in structure.

In the structure of the compound represented by formula 1, Li ion intercalation/deinterlation occurs during the first charge/discharge cycle, wherein the oxidation number of Ni or M is changed from +2 to +4 and the structure of Li₂₊ₓNi_{1-y}M_{y}O₂₊ₐ experiences a phase transition into Li_{2+x-z}Ni_{1-y}M_{y}O₂ (wherein 0≤z<2).

For example, LiNiO₂ has a lattice structure that belongs to the space group R3-m (trigonal hexagonal), wherein a=b, i.e., a is the same as b, c is different from them, alpha=beta=90° and gamma= 120°.

The compound represented by formula 1 deintercalates at least one mole of lithium ion during the first charge cycle, however, on and after discharge of the first cycle, it becomes a substance capable of lithium ion intercalation/deintercalation in an amount of one mole or less.

For example, in the case of Li₂NiO₂, contrary to LiNiO₂, one mole or more of lithium ions are donated to an anode during charge and one mole or less of lithium ions are accepted by a cathode during discharge. Therefore, the discharge efficiency (the first discharge capacity/the first charge capacity x 100) of Li₂NiO₂ in the first charge/ discharge cycle is about 40% or less. In the case of the compound represented by formula 1, Li₂₊ₓNi_{1-y}M_{y}O₂₊ₐ, discharge efficiency in the first charge/discharge slightly varies with the content of the metal M substituting for Ni.

Accordingly, when the lithium nickel oxide represented by formula 1 is used in a cathode as an additive for a cathode active material, the cathode active material composition according to the present invention shows a large difference between initial charge capacity and initial discharge capacity. This irreversible capacity provides lithium ions at least in such an amount as to compensate for an irreversible lithium-consuming reaction in an anode caused by the SEI film formation on the surface of an anode during the first charge. Therefore, it is possible to compensate for the high irreversible capacity of the anode at the first charge/discharge cycle.

In addition, the cathode active material composition according to the present invention, which comprises a lithium transition metal oxide capable of lithium ion intercalation/deintercalation and the lithium nickel oxide represented by formula 1 can inhibit the capacity reduction caused by overdischarge, by virtue of the irreversibility of the lithium nickel oxide represented by formula 1 during the first charge/discharge cycle. This mechanism is shown in FIG. 1.

A battery voltage is defined by the difference of electric potentials between a cathode and an anode. Overdischarge of a battery continuously proceeds until the battery voltage becomes 0 V, at which point the electric potentials of a cathode and an anode are the same.

As mentioned above, in general, the voltage of an anode having a relatively high irreversible capacity increases rapidly, when overdischarging occurs, and thus copper ions are dissolved from an anode collector, so that charge/discharge cycles may not progress successfully. The above-described overdischarging problem results from that an irreversibility of lithium transition metal oxide used as a cathode active material in general is smaller than that of carbon-based anode active material. In order to prevent the increase of the voltage in an anode during overdischarge, it is desirable to increase the irreversible capacity of a cathode so as to decrease the voltage of the cathode rapidly. For the purpose of increasing the irreversible capacity of a cathode, the present invention adopted a method of adding an additive having a high irreversible capacity to a cathode.

According to the present invention, a cathode for a lithium secondary battery is formed by adding to a cathode active material containing a first lithium transition metal oxide capable of lithium ion intercalation/deintercalation, a second lithium transition metal oxide of which an irreversible capacity, (1 - discharge capacity/charge capacity) in the first charge/discharge cycle is greater than that of the first lithium transition metal oxide, as an additive. As a result, it is possible to regulate terminal voltage of a cathode when the electric potential difference (voltage) between a cathode and an anode is OV during overdischarge.

The irreversible capacity of the additive in the first charge/discharge cycle should be greater than 4%, i.e., the irreversible capacity of the general cathode active material. The preferable irreversible capacity of the additive is 30% or greater.

Additionally, in order to reduce the amount of the additive, it is preferable that the irreversible capacity (actual capacity per se rather than capacity ratio) of the additive is relatively high.

Preferably, the used amount of the additive can provide irreversibly lithium ions at least in such an amount as to compensate for an irreversible lithium-consuming reaction in an anode caused by the SEI film formation on the surface of an anode during the first charge. Since the irreversible capacity of the anode is 8% in general, the preferable irreversible capacity of the additive is 8% or more in order to reduce the amount of the additive.

According to the present invention, when the compound represented by formula 1 is added to a cathode to the extent of compensating for the irreversible capacity of an anode, it is possible to obtain very excellent performance in an overdischarge test of a SCF (safety circuit free) battery, which does not need a protection circuit. The SCF battery has peaked the interest to battery production companies recently.

Meanwhile, when the lithium nickel oxide is added to the cathode of a lithium secondary battery as an additive for the cathode active material, Ni in the lithium nickel oxide, which is present in an oxidized state with a valence of +4, may react with an electrolyte during charge to generate gas. Therefore, swelling of a battery may occur at a high temperature depending on the added amount of the lithium nickel oxide. However, the anode and cathode should be in close contact to each other because a non-aqueous lithium secondary battery has low ion conductivity. Accordingly, when swelling of a battery occurs, the contact degree between an anode and a cathode may decrease, thereby increasing electric resistance.

In the compound represented by formula 1 in which nickel is partially substituted with at least one element M selected from the group consisting of P, B, C, Al, bonds originally present in the lithium nickel oxide are substituted with stronger bonds so that a battery can be prevented from swelling at a high temperature.

The compound represented by formula 1 may be prepared by reacting a salt, metal salt, organo- metallic salt or oxide of at least one element selected from the group consisting of P, B, C, Al together with a lithium salt and nickel salt by using a reaction method such as a solid phase reaction, co-precipitation method and a sol-gel method. Methods other than the above-mentioned methods may also be used to prepare the compound represented by formula 1.

The additive for a cathode active material according to the present invention is preferably used in an amount of 0.1 to 10 parts by weight based on 100 parts by weight of the cathode active material. When the content of the additive for a cathode active material is less than 0.1 parts by weight, the voltage of an anode increases in advance of the reduction of the voltage of a cathode during an overdischarge test. Therefore, when the anode voltage reaches a certain range of voltage more than 3.6V (at which point a copper foil as an anode collector is oxidized), the problem of copper ion dissolution may occur in the cases of pouch type batteries, prismatic batteries and cylindrical batteries. As a result, a battery may be damaged so that charge/discharge cycles of the battery are thwarted after overdischarge. Additionally, when the content of the additive for a cathode active material is more than 10 parts by weight, the voltage of a cathode decreases rapidly during an overdischarge test, and thus a battery may show an excellent effect in the overdischarge test. However, reduction of an electrolyte may occur in the surface of the cathode and the battery capacity may be decreased. Therefore, in order to solve both problems in a cathode and an anode, the cathode potential preferably ranges from 2 V to 3.6 V and the anode potential is preferably 3.6 V or less, when the full cell voltage becomes 0 V.

The overdischarge test is carried out as follows: discharging to 3.0V at 300 mA, discharging to 2.7V at 3 mA and discharging to 0V at 1 mA.

The cathode active material used in the present invention is any one of conventional cathode active materials, however, it is preferable to use a lithium transition metal oxide. For example, at least one lithium transition metal oxide selected from the group consisting of LiCoO₂, LiNiO₂, LiMnO₂, LiMn₂O₄, Li(NiₐCo_{b}Mn_{c})O₂(wherein 0<a<1 , 0<b<1 , 0<c<1 and a+b+c=1), LiNi_{1-d}Co_{d}O₂, LiCo_{1-d}Mn_{d}O₂, LiNi_{1-d}Mn_{d}O₂ (wherein 0≤d<1), Li(NiₓCo_{y}Mn_{z})O₄ (wherein D<x<2, 0<y<2, 0<z<2 and x+y+z=2), LiMn₂₋ₙNiₙO₄, LiMn₂₋ₙCoₙO₄ (wherein 0<n<2), LiCoPO₄, LiFePO₄, etc., may be used and LiCoO₂ is preferably used.

As an anode active material, graphite, carbon, lithium metal and alloys, etc., which are capable of lithium ion intercalation/deintercalation, may be used. Preferably, artificial graphite is used. The anode may comprise a binder, the binder being preferably PVDF (Polyvinylidene fluoride) or SBR (Styrene Butadiene Rubber).

As a separator, a porous separator is preferably used. For example, a polypropylene-, a polyethylene- or a polyolefin-based porous separator may be used, but it is not limited thereto.

The electrolyte used in the present invention is a non-aqueous electrolyte and may comprise a cyclic carbonate and a linear carbonate. Examples of the cyclic carbonate include ethylene carbonate (EC), propylene carbonate (PC) and gamma-butyrolactone (GBL). Preferred examples of the linear carbonate include at least one carbonate selected from the group consisting of diethyl carbonate (DEC), dimethyl carbonate (DMC), ethylmethyl carbonate (EMC) and methylpropyl carbonate (MPC).

Additionally, the electrolyte used in the present invention comprises a lithium salt in addition to the carbonate compound. More particularly, the lithium salt is preferably selected from the group consisting of LiClO₄, LiCF₃SO₃, LiPF₆, LiBF₄, LiAsF₆ and LiN(CF₃SO₂)₂.

The lithium secondary battery according to the present invention is manufactured by a conventional method, i.e., by inserting a porous separator between a cathode and an anode and introducing an electrolyte.

Preferably, the lithium secondary battery according to the present invention is a cylindrical can-type battery, a prismatic battery or a pouch-type battery.

### The Advanced Effect

As can be seen from the foregoing, according to the present invention, the compound represented by formula 1 is added to a cathode as an additive for a cathode active material to improve overdischarge characteristics. The additive for a cathode active material can provide lithium ions at least in such an amount as to compensate for the irreversible capacity of an anode. Accordingly, the anode voltage can be prevented from increasing during overdischarge by increasing the irreversibility of a cathode to cause the cathode voltage to be decreased rapidly, so that a battery capacity restorability of 90% or more may be obtained after overdischarge.

Additionally, according to the cathode active material for a lithium secondary battery, which comprises a lithium nickel oxide represented by formula 1 in which nickel is partially substituted with other elements (with the proviso that y is not 0), or a lithium nickel oxide represented by formula 1 that is surface-coated with an oxide other than lithium nickel oxides, as an additive for the cathode active material, capacity of a battery is not significantly reduced after overdischarge while maintaining overall performance of the battery. Further, it is possible to obtain excellent capacity restorability and to prevent a battery from swelling at a high temperature.

### Brief Description of the Drawings

FIG. 1 is a graph showing cathode potential and anode potential, before and after using the additive for a cathode active material according to the present invention.
FIG. 2 is a graph showing the result of a three-pole test of the bi-cell obtained from Comparative Example 1.
FIG. 3 is a graph showing the result of a three-pole test of the bi-cell obtained from Example 1 according to the present invention.
FIG. 4 is a graph showing the result of a three-pole test of the bi-cell obtained from Example 2 according to the present invention.
FIG. 5 is a graph showing the result of a three-pole test of the bi-cell obtained from Example 3 according to the present invention.
FIG. 6 is a diagram showing the X-ray diffraction pattern of the additive for a cathode active material prepared by the method as described in Example 4.
FIG. 7 is a diagram showing the X-ray diffraction pattern of the additive for a cathode active material prepared by the method as described in Example 5.
FIG. 8 is a diagram showing the X-ray diffraction pattern of the additive for a cathode active material prepared by the method as described in Example 6.
FIG. 9 is a diagram showing the X-ray diffraction pattern of the additive for a cathode active material prepared by the method as described in Example 7.
FIG. 10 is a graph showing the results of charge/discharge of batteries prepared by the methods as described in Examples 4 to 7.
FIG. 11 is a graph showing the change in thickness of the pouch type batteries containing the additives for a cathode active material prepared by the methods as described in Examples 4 to 7, after the batteries are stored at a high temperature.
FIG. 12 is a graph showing the overdischarge test results of the pouch type batteries containing the additives for a cathode active material prepared by the methods as described in Examples 4, 5 and 7.
FIG. 13 is a graph showing the overdischarge test result of the pouch type battery manufactured by the method as described in Comparative Example 2.
FIG. 14 is a sectional view of a general pouch type battery used in the following Examples and Comparative Examples, wherein reference numeral 1 is a pouch, 2 is a lid, 3 is a cathode, 4 is an anode, 5 is a cathode current collector, 6 is an anode current collector, 7 is a separator, 8 is lithium metal, and 9 is an electrolyte.

### Mode for Carrying Out the Invention

Reference will now be made in detail to the preferred embodiments of the present invention. It is to be understood that the following examples are illustrative only and the present invention is not limited thereto.

It is noted that the examples 1, 2, 3, 5 and 7 are not part of the present invention.

### [Example 1]

A pouch-type bi-cell was manufactured by a conventional method. LiCoO₂ was used as a cathode active material and Li₂NiO₂ was added as an additive in the amount of 2 parts by weight based on 100 parts by weight of the cathode active material. More particularly, 78.4 wt% of LiCoO₂, 1.6 wt% of Li₂NiO₂, 10 wt% of KS-6 (conductive agent) and 10 wt% of PVDF (binder) were added to NMP as a solvent to form cathode mixture slurry, and then the slurry was coated on an Al collector to obtain a cathode. Additionally, artificial graphite and copper were used as an anode active material and an anode collector, respectively, and an EC/PC/DEC-based solution containing 1M LiPF₆ was used as an electrolyte to obtain a battery by a conventional method.

### [Example 2]

Example 1 was repeated to obtain a battery, except that Li₂NiO₂ as an additive for a cathode active material was used in the amount of 5 parts by weight based on 100 parts by weight of the cathode active material.

### [Example 3]

Example 1 was repeated to obtain a battery, except that Li₂NiO₂ as an additive for a cathode active material was used in the amount of 9 parts by weight based on 100 parts by weight of the cathode active material.

### [Comparative Example 1]

Example 1 was repeated to obtain a battery, except that the additive for a cathode active material (Li₂NiO₂) was not used in the cathode.

### [Experimental Example 1]

A three-pole test is performed for each of the bi-cells according to Examples 1 to 3 and Comparative Example 1. The results are shown in FIGs. 2 to 5. Generally, when the performance of a cell is evaluated by capacity, concept of full cell voltage is used. The full cell voltage is defined as the difference between the voltage of a cathode and that of an anode in the case of a cell having two electrodes of one cathode and one anode. A three-pole cell system includes lithium metal inserted into a cell as a reference electrode, in addition to a cathode and an anode. Such a three-pole system is used to determine the behavior of the cathode and anode in an actual cell during charge/discharge cycles, based on the reference electrode (lithium metal), by measuring the voltage difference between the reference electrode (lithium metal) and the cathode and the voltage difference between the reference electrode (lithium metal) and the anode, respectively.

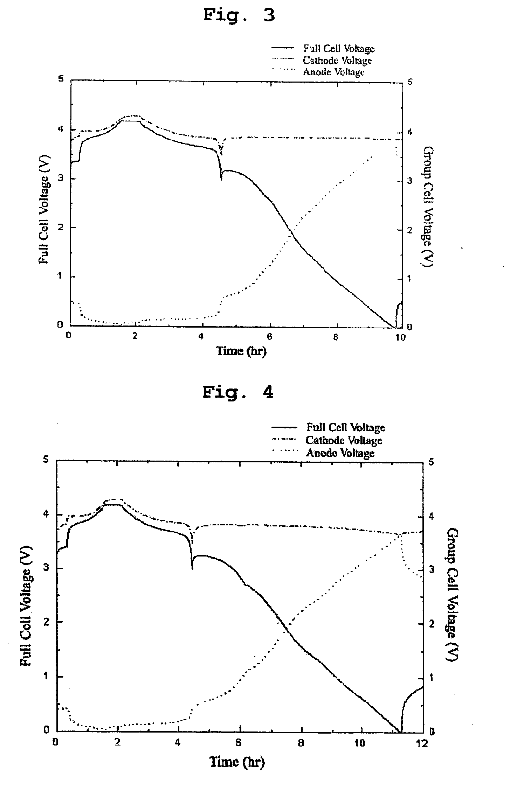

As shown in FIG. 2, in an overdischarge test, Comparative Example 1 shows a plateau (represented by a circle) in which copper ion dissolution occurs after the voltage of an anode increases. On the other hand, as shown in FIGs. 3 to 5, each of Examples 1 to 3 shows no plateau corresponding to copper ion dissolution.

### [Example 4]

Lithium oxide as a lithium salt, nickel oxide as a nickel salt and aluminum nitrate as an aluminum salt used to substitute for nickel were mixed in an adequate equivalent ratio and then reacted in a solid phase at 600°C to obtain Li₂Ni_{0.97}Al_{0.03}O₂ as an additive for a cathode active material. X-ray diffraction pattern of the additive for a cathode active material is shown in FIG. 6.

Next, 92.12 wt% of LiCoO₂, 1.88 wt% of the additive for a cathode active material, 3 wt% of super-P (conductive agent) and 3 wt% of PVDF (binder) were added to NMP as a solvent to form cathode mixture slurry, and then the slurry was coated on an Al collector to obtain a cathode. Additionally, artificial graphite and copper were used as an anode active material and an anode collector, respectively, and an EC/PC/DEC-based solution containing 1M LiPF₆ was used as an electrolyte to obtain a battery by a conventional method. Charge/discharge capacity of the battery is shown in FIG. 10.

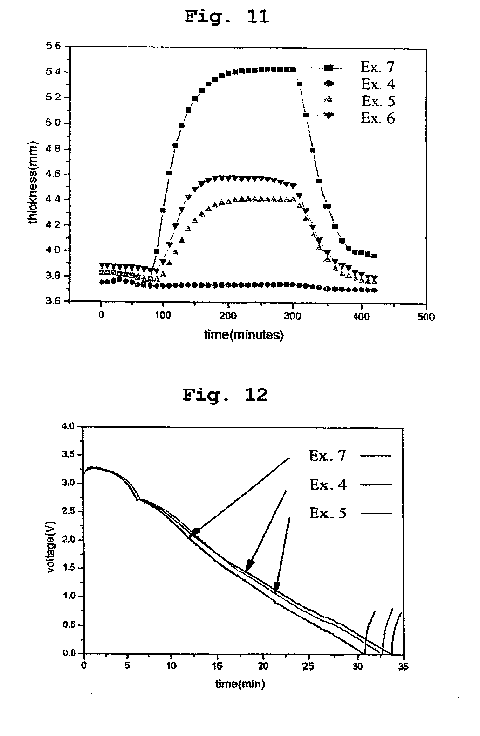

Further, the pouch type battery was charged to 4.2V at 0.2C, heated from room temperature to 90°C for 1 hour, stored at 90°C for 4 hours and then cooled back to room temperature for 1 hour. At this time, change in thickness of the battery was measured. The result is shown in FIG. 11. The overdischarge test result of the battery is shown in Table 1 and FIG. 12.

### [Example 5]

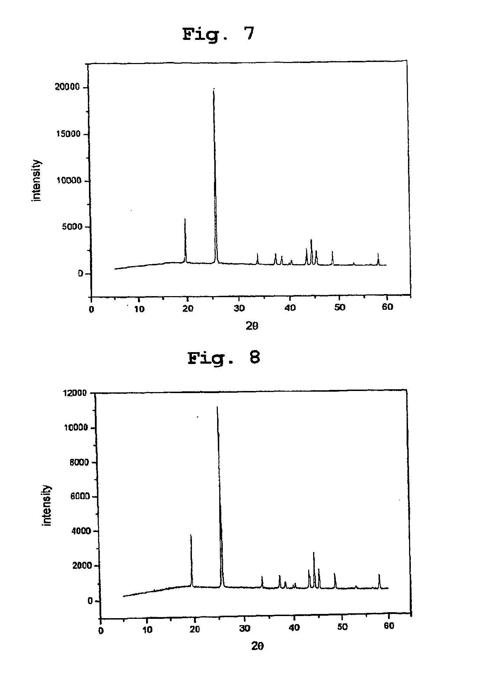

Example 4 was repeated to obtain Li₂Ni_{0.97}Mg_{0.03}O₂ as an additive for a cathode active material, except that magnesium was used as an element substituting for nickel. X-ray diffraction pattern of the additive for a cathode active material is shown in FIG. 7. A battery was manufactured by using the additive for a cathode active material in the same manner as described in Example 4. Charge/discharge capacity of the battery is shown in FIG. 10.

By using the same method as described in Example 4, change in thickness of the pouch type battery was measured after the battery was stored at a high temperature. The result is shown in FIG. 11. Additionally, the overdischarge test result of the battery is shown in Table 1 and FIG. 12.

### [Example 6]

Example 4 was repeated to obtain Li₂Ni_{0.97}B_{0.03}O₂ as an additive for a cathode active material, except that boron was used as an element substituting for nickel. X-ray diffraction pattern of the additive for a cathode active material is shown in FIG. 8. A battery was manufactured by using the additive for a cathode active material in the same manner as described in Example 4. Charge/discharge capacity of the battery is shown in FIG. 10.

By using the same method as described in Example 4, change in thickness of the pouch type battery was measured after the battery was stored at a high temperature. The result is shown in FIG. 11. Additionally, the overdischarge test result of the battery is shown in Table 1.

### [Example 7]

A lithium salt and a nickel salt were mixed in an adequate equivalent ratio and reacted together in an electric furnace to obtain Li₂NiO₂ as an additive for a cathode active material. X-ray diffraction pattern of the additive for a cathode active material is shown in FIG. 9. A battery was manufactured by using the additive for a cathode active material in the same manner as described in Example 4. Charge/discharge capacity of the battery is shown in FIG. 10.

By using the same method as described in Example 4, change in thickness of the pouch type battery was measured after the battery was stored at a high temperature. The result is shown in FIG. 11. Additionally, the overdischarge test result of the battery is shown in Table 1 and FIG. 12.

### [Comparative Example 2]

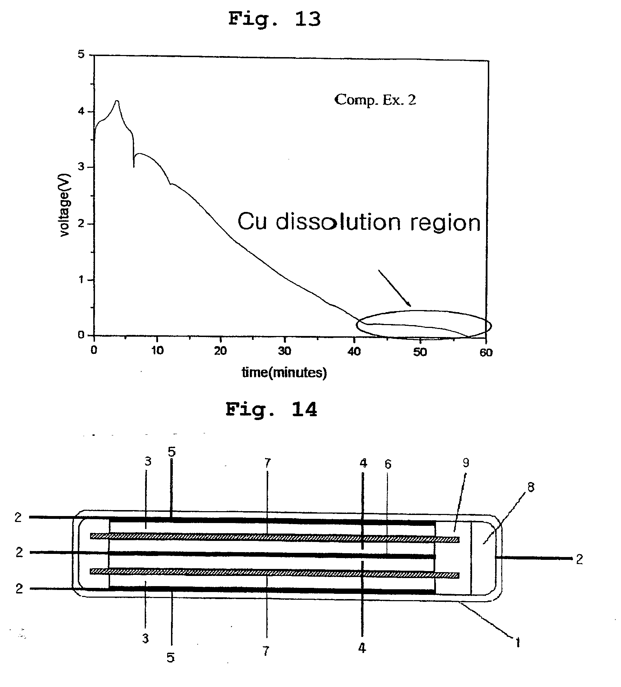

Example 4 was repeated to obtain a battery, except that the additive for a cathode active material was not added to the cathode active material. The overdischarge test result of the battery is shown in Table 1 and FIG. 13.

**[Table 1]**

| | Discharge capacity before overdischarge (0.2C)/mA | Discharge capacity after overdischarge (0.2C)/mA | Capacity restorability after overdischarge (%) |
|---|---|---|---|
| Ex. 7 | 732 | 682 | 93.2% |
| Comp.Ex. 2 | 728 | 464 | 63.7% |
| Ex. 4 | 742 | 699 | 94.2% |
| Ex. 5 | 738 | 687 | 93.1% |
| Ex. 6 | 729 | 673 | 92.3% |

As can be seen from Table 1 and FIGs. 10 and 12, each of the batteries obtained from Examples 4 to 7 shows similar charge/discharge efficiency. Capacity of each battery is not significantly reduced even after overdischarge and each battery has excellent capacity restorability after overdischarge. Additionally, as shown in Table 1 and FIG. 13, the battery obtained from Comparative Example 2 (to which the additive for a cathode active material for improving overdischarge characteristics according to the present invention is not added) shows poor overdischarge characteristics compared to other batteries.

However, as can be seen from FIG. 11, Example 4 using Li₂Ni_{0.97}Al_{0.03}O₂ as an additive for a cathode active material for improving overdischarge characteristics shows little change in battery thickness. Example 6 using Li₂Ni_{0.97}B_{0.03}O₂ as an additive for a cathode active material, respectively, show smaller change in battery thickness compared to Example 7 using Li₂NiO₂ as an additive for a cathode active material. This indicates that each additive for a cathode active material for improving overdischarge characteristics according to Examples 4 to 6 provides excellent effect of preventing a battery from swelling at high temperature compared to the additive according to Example 7.

## Claims

1. A method for regulating terminal voltage of a cathode for a lithium secondary battery when electric potential difference (voltage) between a cathode and an anode is 0V during overdischarge, which comprises forming a cathode by adding to a cathode active material containing a first lithium transition metal oxide capable of lithium ion intercalation/deintercalation, a second lithium transition metal oxide of which an irreversible capacity in the first charge/discharge cycle is greater than that of the first lithium transition metal oxide, as an additive, wherein the additive is a lithium nickel oxide represented by the following formula 1:
[formula 1] Li₂₊ₓNi_{1-y}MyO₂₊ₐ
**characterised in that** x is a number satisfying-0.5≤x≤0.5, y is a number satisfying 0<y<1, a is a number satisfying0≤a<0.3, and M is at least one element selected from the group consisting of P, B, C, and Al.

2. The method according to claim 1, wherein the additive is added to the extent of providing irreversibly lithium ions at least in such an amount as to compensate for an irreversible lithium-consuming reaction in an anode caused by the SEI film formation on the surface of an anode during the first charge.

3. A cathode active material for a lithium secondary battery containing a lithium transition metal oxide capable of lithium ion intercalation/deintercalation, which further comprises a lithium nickel oxide represented by the following formula 1 in which nickel is partially substituted with other elements, as an additive:
[formula 1] Li₂₊ₓNi_{1-y}MyO₂₊ₐ
**characterized in that** x is a number satisfying-0.5≤x≤0.5, y is a number satisfying 0<y<1, a is a number satisfying0≤a<0.3, and M is at least one element selected from the group consisting of P, B, C, and Al.

4. The cathode active material according to claim 3, wherein the compound represented by formula 1 belongs to the space group Immm.

5. The cathode active material according to claim 4, wherein the compound represented by formula 1 forms a tetra-coordinated planar structure, (Ni,M)O₄ and two tetra-coordinated planar structures facing to each other share one side formed by O-O so as to form a primary chain.

6. The cathode active material according to claim 4, wherein the compound represented by formula 1 has the following lattice constants: a=3.7±0.5 Å, b=2.8±0.5 Å, c=9.2±0.5 Å, α= 90°, β= 90° and γ= 90.

7. The cathode active material according to claim 3, wherein the lithium transition metal oxide is at least one selected from the group consisting of LiCoO₂, LiNiO₂, LiMnO₂, LiMn₂O₄, Li(NiₐCo_{b}Mn_{c})O₂, LiNi_{1-d}CO_{d}O₂ LiCo_{1-d}Mn_{d}O₂, LiNi_{1-d}Mn_{d}O₂, Li(NiₓCo_{y}Mn_{z})O₄, LiMn₂₋ₙNiₙO₄, LiMn₂₋ₙCoₙO₄, LiCoPO₄ and LiFePO₄, wherein 0<a<1, 0<b<1, 0<c<1, a+b+c=1, 0≤d<1, 0<x<2, 0<y<2, 0<z<2, x+y+z=2, and 0<n<2.

8. The cathode active material according to claim 3, which comprises the additive for a cathode active material in an amount of 0.1 to 10 parts by weight based on 100 parts by weight of the cathode active material.

9. A lithium secondary battery comprising a cathode, an anode, a separator and a non-aqueous electrolyte containing a lithium salt and an electrolyte compound, wherein the cathode comprises a cathode active material defined in any one of claims 3 to 8.

10. The lithium secondary battery according to claim 9, wherein the lithium salt is at least one selected from the group consisting of LiClO₄, LiCF₃SO₃, LiPF₆, LiBF₄, LiAsF₆ and LiN(CF₃SO₂)₂, and the electrolyte compound is at least one carbonate selected from the group consisting of ethylene carbonate (EC), propylene carbonate (PC), gamma-butyrolactone (GBL), diethyl carbonate (DEC), dimethyl carbonate (DMC), ethylmethyl carbonate (EMC) and methylpropyl carbonate (MPC).

## Patentansprüche

1. Verfahren zum Steuern der Klemmenspannung einer Kathode für eine Lithium-Sekundärbatterie, wenn die Differenz des elektrischen Potentials (Spannung) zwischen der Kathode und der Anode während einer Überentladung 0 V beträgt, das Folgendes aufweist:
Erzeugen einer Kathode, indem einem aktiven Kathodenmaterial, das ein erstes Lithiumübergangsmetalloxid enthält, das zur Interkalation/Deinterkalation von Lithiumionen in der Lage ist, als Zusatzstoff ein zweites Lithiumübergangsmetalloxid zugesetzt wird, dessen irreversible Kapazität beim ersten Lade/Entlade-Zyklus größer als die des ersten
Lithiumübergangsmetalloxids ist, wobei der Zusatzstoff ein Lithiumnickeloxid der folgenden Formel 1 ist:
[Formel 1] Li₂₊ₓNi_{1-y}M_{y}O₂₊ₐ
**dadurch gekennzeichnet, dass**
x eine Zahl ist, die -0,5 ≤ x ≤ 0,5 entspricht,
y eine Zahl ist, die 0 < y < 1 entspricht,
a eine Zahl ist, die 0 ≤ a < 0,3 entspricht, und
M zumindest ein Element ist, das aus der Gruppe ausgewählt ist, die aus P, B, C und A1 besteht.

2. Verfahren nach Anspruch 1,
wobei der Zusatzstoff in einer solchen Menge zugesetzt wird, dass Lithiumionen zumindest einer solchen Menge irreversibel bereitgestellt werden, dass eine irreversible Lithium verbrauchende Reaktion in der Anode kompensiert wird, die während des ersten Ladens durch die Entstehung einer SEI-Schicht auf der Oberfläche der Anode hervorgerufen wird.

3. Aktives Kathodenmaterial für eine Lithium-Sekundärbatterie, die ein Lithiumübergangsmetalloxid enthält, das zur Interkalation/Deinterkalation von Lithiumionen in der Lage ist,
das ferner ein Lithiumnickeloxid der folgenden Formel 1 als Zusatzstoff enthält, worin Nickel teilweise durch andere Elemente ersetzt ist;
[Formel 1] Li₂₊ₓNi_{1-y}MyO₂₊ₐ
**dadurch gekennzeichnet, dass**
x eine Zahl ist, die -0,5 ≤ x ≤ 0,5 entspricht,
y eine Zahl ist, die 0 < y < 1 entspricht,
a eine Zahl ist, die 0 ≤ a < 0,3 entspricht, und
M zumindest ein Element ist, das aus der Gruppe ausgewählt ist, die aus P, B, C und A1 besteht.

4. Aktives Kathodenmaterial nach Anspruch 3,
wobei die Verbindung der Formel 1 zur Raumgruppe Immm gehört.

5. Aktives Kathodenmaterial nach Anspruch 4,
wobei die Verbindung der Formel 1 eine tetrakoordinierte plane Struktur bildet, wobei sich (Ni,M)O₄ und zwei tetrakoordinierte plane Strukturen, die einander gegenüberliegen, eine Seite teilen, die von O-O gebildet wird, so dass eine primäre Kette entsteht.

6. Aktives Kathodenmaterial nach Anspruch 4,
wobei die Verbindung der Formel 1 die folgenden Gitterkonstanten aufweist:
a = 3,7 ± 0,5 Å, b = 2,8 ± 0,5 Å, c = 9,2 ± 0,5 Å, [α] = 90°; [β] = 90° und [γ] = 90°.

7. Aktives Kathodenmaterial nach Anspruch 3,
wobei das Lithiumübergangsmetalloxid zumindest ein solches ist, das aus der Gruppe ausgewählt ist, bestehend aus LiCoO₂, LiNiO₂, LiMnO₂, LiMn₂O₄, Li(NiₐCo_{b}Mn_{c})O₂, LiNi_{1-d}Co_{d}O₂, LiCo_{1-d}Mn_{d}O₂, LiNi_{1-d}Mn_{d}O₂, Li(NiₓCo_{y}Mn_{z})O₄, LiMn₂₋ₙNiₙO₄, LiMn₂₋ₙCoₙO₄, LiCoPO₄ und LiFePO₄, wobei 0<a<1; 0<b<1; 0<c<1; a+b+c=1; 0≤d<1; 0<x<2; 0<y<2; 0<z<2; x+y+z=2 und 0<n<2.

8. Aktives Kathodenmaterial nach Anspruch 3,
das den Zusatzstoff für ein aktives Kathodenmaterial in einer Menge von 0,1 bis 10 Gew.-Teilen aufweist, und zwar auf 100 Gew.-Teile des aktiven Kathodenmaterials bezogen.

9. Lithium-Sekundärbatterie, die eine Kathode, eine Anode, einen Separator und einen nicht-wässrigen Elektrolyt enthält, der ein Lithiumsalz und eine Elektrolytverbindung enthält, wobei die Kathode ein aktives Kathodenmaterial nach einem der Ansprüche 3 bis 8 aufweist.

10. Lithium-Sekundärbatterie nach Anspruch 9,
wobei das Lithiumsalz zumindest ein solches ist, das aus der Gruppe ausgewählt ist, die aus LiClO₄, LiCF₃SO₃, LiPF₆, LiBF₄, LiAsF₆ und LiN(CF₃SO₂)₂ besteht, und die Elektrolytverbindung zumindest ein Carbonat ist, das aus der Gruppe ausgewählt ist, die aus Ethylencarbonat (EC), Propylencarbonat (PC), γ-Butyrolacton (GBL), Diethylcarbonat (DEC), Dimethylcarbonat (DMC), Ethylmethylcarbonat (EMC) und Methylpropylcarbonat (MPC) besteht.

## Revendications

1. Procédé de régulation d'une tension terminale d'une cathode pour un accumulateur secondaire au lithium lorsque la différence de potentiel électrique (tension) entre une cathode et une anode est de 0 V pendant une surcharge, lequel comprend la formation d'une cathode par addition à une matière active de cathode contenant un premier oxyde de métal de transition et de lithium capable d'un intercalement/désintercalement d'ion lithium, d'un second oxyde de métal de transition et de lithium dont une capacité irréversible dans le premier cycle de charge/décharge est supérieure à celle du premier oxyde de métal de transition de lithium, en tant qu'additif, dans lequel l'additif est un oxyde de lithium et de nickel représenté par la formule 1 suivante :
[formule 1] Li₂₊ₓNi_{1-y}MyO₂₊ₐ
**caractérisé en ce que** x est un nombre satisfaisant -0,5 ≤ x ≤ 0,5, y est un nombre satisfaisant 0 < y < 1, a est un nombre satisfaisant 0 ≤ a < 0,3, et M est au moins un élément choisi dans le groupe constitué de P, B, C, et Al.

2. Procédé selon la revendication 1, dans lequel l'additif est ajouté dans la mesure telle qu'il fournit irréversiblement des ions lithium au moins dans une quantité pour compenser une réaction consommant du lithium irréversible dans une anode, occasionnée par la formation d'un film SEI sur la surface d'une anode pendant la première charge.

3. Matière active de cathode pour un accumulateur secondaire au lithium contenant un oxyde de métal de transition et de lithium capable d'un intercalement/désintercalement d'ion lithium, laquelle comprend de plus un oxyde de nickel et de lithium représenté par la formule 1 suivante dans laquelle le nickel est partiellement substitué avec d'autres éléments, en tant qu'additif :
[formule 1] Li₂₊ₓNi_{1-y}MyO₂₊ₐ
**caractérisée en ce que** x est un nombre satisfaisant -0,5 ≤ x ≤ 0,5, y est un nombre satisfaisant 0 < y < 1, a est un nombre satisfaisant 0 ≤ a < 0,3 et M est au moins un élément choisi dans le groupe constitué de P, B, C, et Al.

4. Matière active de cathode selon la revendication 3, dans laquelle le composé représenté par la formule 1 appartient au groupe spatial Immm.

5. Matière active de cathode selon la revendication 4, dans laquelle le composé représenté par la formule 1 forme une structure planaire tétra-coordonnée, (Ni,M)O₄ et deux structures planaires tétracoordonnées opposées l'une à l'autre se partagent un côté formé par O-O afin de former une chaîne primaire.

6. Matière active de cathode selon la revendication 4, dans laquelle le composé représenté par la formule 1 présente les constantes de réseau suivantes : a = 3,7 ± 0,5 Å, b = 2,8 ± 0,5 Å, c = 9,2 ± 0,5 Å, α=90°, β=90° et γ=90.

7. Matière active de cathode selon la revendication 3, dans laquelle l'oxyde de métal de transition et de lithium est au moins un choisi dans le groupe constitué de LiCoO₂, LiNiO₂, LiMnO₂, LiMn₂O₄, Li(NiₐCo_{b}Mn_{c})O₂, LiNi_{1-d}CO_{d}O₂, Lico_{1-d}Mn_{d}O₂, LiNi_{1-d}Mn_{d}O₂, Li(NiₓCo_{y}Mn_{z})O₄, LiMn₂₋ₙNiₙO₄, LiMn₂₋ₙCoₙO₄, LiCoPO₄ et LiFePO₄, où 0 < a < 1, 0 < b < 1, 0 < c < 1, a + b + c = 1, 0 ≤ d < 1, 0 < x < 2, 0 < y < 2, 0 < z < 2, x + y + z = 2, et 0 < n < 2.

8. Matière active de cathode selon la revendication 3, laquelle comprend l'additif pour une matière active de cathode dans une quantité de 0,1 à 10 parties en masse rapporté à 100 parties en masse de la matière active de cathode.

9. Accumulateur secondaire au lithium comprenant une cathode, une anode, un séparateur et un électrolyte non aqueux contenant un sel de lithium et un composé d'électrolyte, dans lequel la cathode comprend une matière active de cathode définie dans l'une quelconque des revendications 3 à 8.

10. Accumulateur secondaire au lithium selon la revendication 9, dans lequel le sel de lithium est au moins un choisi dans le groupe constitué de LiClO₄, LiCF₃SO₃, LiPF₆, LiBF₄, LiAsF₆ et LiN(CF₃SO₂)₂, et le composé d'électrolyte est au moins un carbonate choisi dans le groupe constitué du carbonate d'éthylène (EC), du carbonate de propylène (PC), de la gamma-butyrolactone (GBL), du carbonate de diéthyle (DEC), du carbonate de diméthyle (DMC), du carbonate d'éthylméthyle (EMC) et du carbonate de méthylpropyle (MPC).
